Europäisches Patentamt

European Patent Office

Office européen des brevets

(19)

(11) Veröffentlichungsnummer: **0 257 132**
**B1**

(12) **EUROPÄISCHE PATENTSCHRIFT**

(45) Veröffentlichungstag der Patentschrift:
**16.08.90**

(51) Int. Cl.⁵: **B60K 23/08, F16H 1/36**

(21) Anmeldenummer: **86114588.6**

(22) Anmeldetag: **21.10.86**

(54) **Allrad-Sperrsystem im Antriebsstrang eines Kraftfahrzeugs.**

(30) Priorität: **29.08.86 DE 3629493**

(43) Veröffentlichungstag der Anmeldung:
**02.03.88 Patentblatt 88/9**

(45) Bekanntmachung des Hinweises auf die Patenterteilung:
**16.08.90 Patentblatt 90/33**

(84) Benannte Vertragsstaaten:
**AT BE CH DE ES FR GB IT LI NL SE**

(56) Entgegenhaltungen:
**EP-A- 0 252 183**
**DE-A- 2 332 842**
**DE-A- 3 218 830**
**DE-A- 3 611 968**
**DE-C- 3 507 490**

(73) Patentinhaber: **Dr.Ing.h.c. F. Porsche**
**Aktiengesellschaft, Porschestrasse 42,**
**D-7000 Stuttgart 40(DE)**

(72) Erfinder: **Pitsch, Hermann, Dipl.-Ing. FH, Tannweg 17,**
**D-7251 Wimsheim(DE)**

## Beschreibung

Die Erfindung betrifft ein Allrad- Sperrsystem nach dem Oberbegriff des Anspruchs 1.

Ein derartiges Sperrsystem ist in DE-C 3 507 490 beschrieben. Das dabei verwendete Planetengetriebe besteht aus einem mit der antreibenden Achse verbundenen Eingangssonnenrad, einem koaxial daneben gelagerten und mit der zu treibenden Achse verbundenen Ausgangssonnenrad etwas größerer Zähnezahl sowie aus den mit beiden Sonnenrädern zugleich in Eingriff stehenden Planetenrädern, die an einem Planetenträger gelagert sind. Am Planetenträger sind Lagerbolzen angebracht, auf denen als Bremsglieder Bremsbacken so gelagert sind, daß sie als Fliehgewichte wirksam werden, wenn sich der Planetenträger dreht und sich mit ihren Bremsbelägen an eine als Gegenbremsglied dienende feststehende Bremstrommel anlegen. Da das Ausgangssonnenrad einen oder zwei Zähne weniger hat als das Eingangssonnenrad, dreht sich der Planetenträger, der eine Zahnradübersetzung von z. B. 16:1 zu den Sonnenrädern hat, ständig, auch wenn die Vorderachse- und Hinterachse synchron laufen, so daß das Sperrsystem dauernd eine, wenn auch geringe Verlustleistung erbringt. Hat z. B. das Eingangssonnenrad eine Zähnezahl von Z=32, das Ausgangssonnenrad Z=30 Zähne, so wird die Zahnradübersetzung des Planetenträgers zu den Sonnenrädern mit 16:1 ausgelegt. Die bauliche Mindestgröße des Sperrsystems wird durch den Aussendurchmesser der Sonnenräder bestimmt, der erforderlich ist, um bei ausreichender Zahnfestigkeit auf ihm 32 Zähne unterbringen zu können.

Es ist die Aufgabe der Erfindung, ein solches Sperrsystem in der Weise weiterzubilden, daß es bei gleichen Festigkeitswerten weniger Bauraum erfordert.

Eine Lösung dieser Aufgabe gelingt mit den kennzeichnenden Merkmalen des Anspruchs 1. Hierbei sind anstelle von zwei Sonnenrädern zwei nebeneinander gelagerte Hohlräder geringfügig unterschiedlicher Zähnezahl verwendet, mit denen die Planetenräder eines Planetenträgers in Eingriff stehen, an dem die Bremsvorrichtung angreift. Geht man davon aus, daß der Zahnumfang an den Hohlrädern genauso groß ist wie er bei den Sonnenrädern sein müßte, so wird bei diesem Sperrsystem die radiale Ausdehnung wesentlich kleiner, da die Planetenräder vom Zahnumfang aus radial nach innen angeordnet sind. Infolge der kleineren Durchmesser des Radsatzes des Planetenträgers wird seine Schwungmasse geringer, so daß ein besseres Ansprechverhalten des Sperrsystems erreicht wird und eine Unwucht im Radsatz sich nicht so negativ auswirken kann.

Wenn nach Anspruch 2 ein mit dem Planetenträger verbundenes Bremsglied mit einem Gegenbremsglied zusammenwirkt, das drehfest mit dem Antriebsstrang Vorderachse- Hinterachse verbunden ist, läuft bei deren Synchronlauf das ganze Sperrsystem mit um, ohne daß der Planetenträger hierbei eine Relativdrehung ausführt. Infolgedessen entsteht in diesem Fall auch kein Bremsmoment und kein Leistungsverlust. Ein bremsendes Sperrmoment wird erst erzeugt, wenn die Drehzahlen von Vorderachse- und Hinterachse unterschiedlich sind, da nur dann eine Relativdrehung zwischen dem Bremsglied und dem Gegenbremsglied erzeugt wird. Aus diesem Grunde können auch die Winkeltriebübersetzungen zur vorderachse- und Hinterachse gleichgroß bemessen sein.

Ein Ausführungsbeispiel der Erfindung ist in der Zeichnung dargestellt und wird nachfolgend erläutert.

Es zeigt

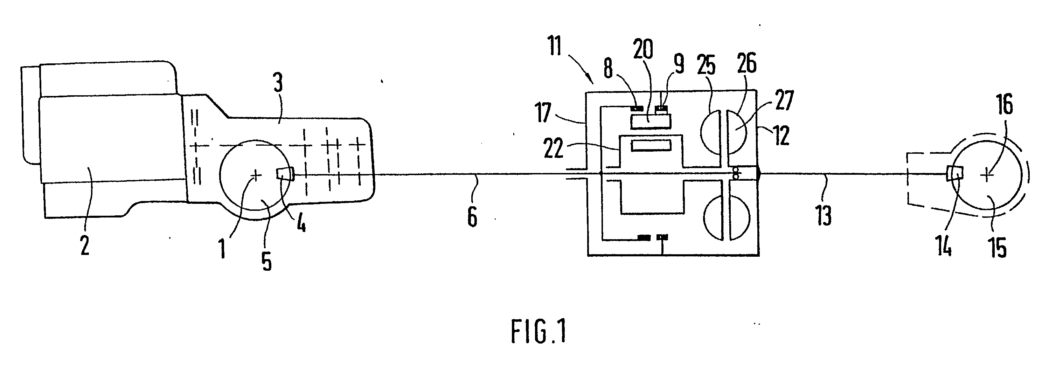

Fig. 1 Allrad- Antriebsschema eines Kraftfahrzeuges

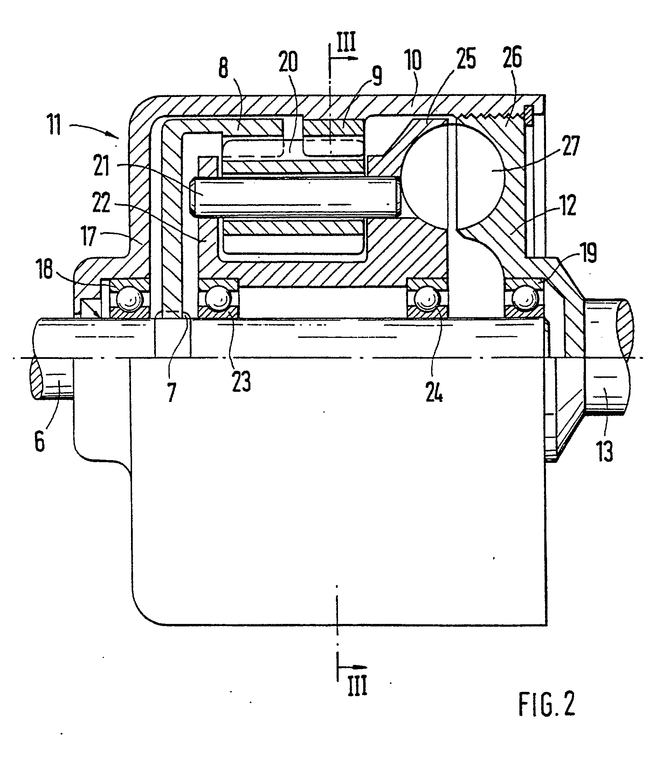

Fig. 2 Längsschnitt durch das Allrad- Sperrsystem

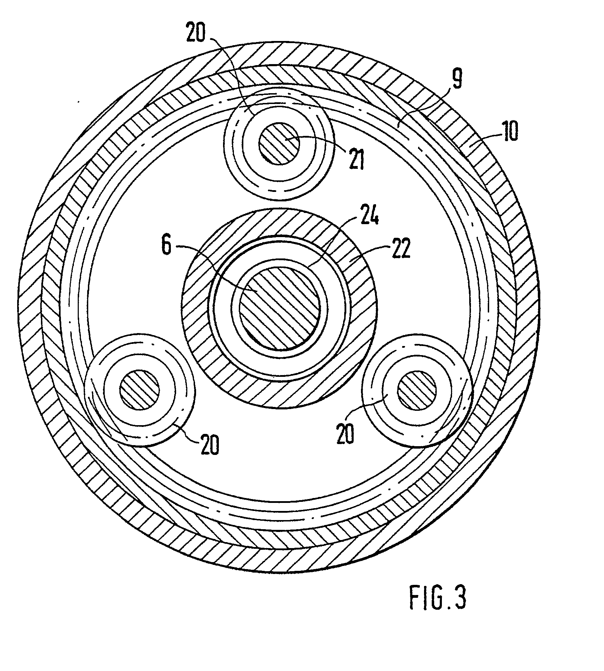

Fig. 3 Querschnitt nach der Linie III-III der Fig. 2.

Ein nahe der Vorderachse 1 an einem Kraftfahrzeug angeordneter Antriebsmotor 2 teibt mit einem an ihm angebauten Gangschaltgetriebe 3 über ein Kegelrad 4 und ein Tellerrad 5 die Vorderachse 1 an. Von dem Kegelrad 4 geht eine Antriebswelle 6 zu einem auf ihr mit einer Kerbverzahnung 7 befestigten, mit einer Innenverzahnung versehenen Eingangshohlrad 8 eines Planetengetriebes.

Koaxial zu dem Eingangshohlrad 8 ist neben ihm ein Ausgangshohlrad 9 gelagert, das in einer Sitzstelle am Mantel 10 eines das Sperrsystem dicht umschließenden Gehäuses 11 eingepreßt ist. Außen an der rechten Stirnseite 12 des Gehäuses 11 ist eine Abtriebswelle 13 angebracht, die über ein Kegelrad 14 und ein Tellerrad 15 die Hinterachse 16 des Kraftfahrzeugs antreibt. Gleichachsig zur Abtriebswelle 13 ist durch die linke Stirnseite 17 des Gehäuses 11 die Antriebswelle 6 durchgeführt und in Lagern 18 und 19 in der linken Stirnseite 17 und der rechten Stirnseite 12 des Gehäuses 11 gelagert.

Mit dem Eingangshohlrad 8 und dem Ausgangshohlrad 9 gemeinsam stehen drei Planetenräder 20 in Eingriff, die symmetrisch am Umfang der Hohlräder 8, 9 angeordnet sind. Die Planetenräder 20 sind auf Lagerbolzen 21 gelagert, die in einen U-förmig gestalteten Planetenträger 22 eingepreßt sind. In Lagern 23 und 24 ist der Planetenträger auf der Antriebswelle gelagert. An dem Planetenträger 22 ist ein als beschaufelte Halbschale ausgebildetes Bremsglied 25 angeformt, das die eine Hälfte einer hydrodynamischen Kupplung darstellt. Eine zweite beschaufelte Halbschale wirkt als Gegenbremsglied 26; sie ist einstückig mit der rechten Seite 12 des Gehäuses 11 ausgebildet und im Mantel 10 des Gehäuses 11 zentriert und befestigt. Beide Halbschalen bilden zusammen einen torusförmigen Strömungsraum 27, der mit Hydraulikflüssigkeit gefüllt ist und bei einer Relativdrehung der Halbschalen zueinander infolge der Scherkraft der Flüssigkeit ein entsprechendes Bremsmoment überträgt.

Das Eingangshohlrad 8 hat eine Zähnezahl Z=54, das Ausgangshohlrad 9 eine Zähnezahl Z=51, sodaß die Übersetzung für den Direktdurchtrieb 54:51 ist. Die Zahnradübersetzung zum Planetenträger 22 beträgt 18:1. Tritt eine Drehzahldifferenz zwischen der Vorderachse 1 und der Hinterachse und somit eine gleich große Drehzahldifferenz zwischen der Antriebswelle 6 und der Abtriebswelle 10 auf, so dreht der Planetenträger mit dem 18-fachen dieser Drehzahldifferenz. Durch die Relativdrehung des Bremsgliedes zum Gegenbremsglied wird ein der Drehzahldifferenz entsprechendes Bremsmoment aufgebaut, das einen Synchronlauf von Vorderachse und Hinterachse bewirkt.

Infolge des progressiv ansteigenden, hydrodynamischen Bremsmoments wird das Sperrmoment bei kleinen Schlupfwerten klein gehalten. Das Kraftfahrzeug ist gut lenkbar und ein ABS-System ist voll funktionsfähig. Bei großen Schlupfwerten, wie sie z. B. auftreten, wenn die Räder der Vorderachse 1 auf Eis durchrutschen, die Räder der Hinterachse 13 auf griffigem Asphalt stehen, steigt das Sperrmoment steil an und ermöglicht auch in diesem Extremfall ein problemloses Anfahren.

## Patentansprüche

1. Allrad-Sperrsystem im Antriebsstrang Vorderachse-Hinterachse eines Kraftfahrzeuges mit einem den direkten Durchtrieb vermittelnden Planetengetriebe und einer an dessen Planetenträger angreifenden Bremsvorrichtung, wobei die Zahnradübersetzung für den Direktdurchtrieb geringfügig von 1:1 abweicht, die Zahnradübersetzung zur Bremsvorrichtung aber wesentlich höher ist, dadurch gekennzeichnet, daß das Planetengetriebe aus einem gegenüber einer Antriebswelle (6) drehfesten Eingangshohlrad (8), einem koaxial daneben gelagerten, zu einer Abtriebswelle (13) drehfesten Ausgangshohlrad (9) geringfügig unterschiedlicher Zähnezahl, sowie aus mit beiden Hohlrädern (8, 9) gemeinsam in Eingriff stehenden, an dem Planetenträger (22) gelagerten und mit ihm umlaufenden Planetenrädern (20) zusammengesetzt ist, wobei das Planetengetriebe (8) aus einem mit einer Antriebswelle (6) drehfest verbundenen Eingangssonnenrad (7), einem koaxial daneben gelagerten und mit einer Abtriebswelle (10) verbundenen Ausgangssonnenrad (10) etwas größerer Zähnezahl, sowie aus den mit beiden Sonnenrädern (7, 9) gemeinsam in Eingriff stehenden, an dem Planetenträger (15) gelagerten Planetenrädern (14) zusammengesetzt ist.

2. Sperrsystem nach Anspruch 1 dadurch gekennzeichnet, daß das Bremsglied (25) nach Anspruch 1 dadurch gekennzeichnet, daß das Bremsglied (25) und Gegenbremsglied (26) zusammen eine hydrodynamische Kupplung bilden.

3. Sperrsystem nach Anspruch 2 dadurch gekennzeichnet, daß das Bremsglied (25) und das Gegenbremsglied (26) als beschaufelte Halbschalen ausgebildet sind, die einen ölgefüllten, torusförmigen Strömungsraum (27) umschließen.

4. Sperrsystem nach Anspruch 3, dadurch gekennzeichnet, daß das Gegenbremsglied (26) in einem mit ihm umlaufenden, zylindrischen Gehäuse (11) zentriert und abgedichtet befestigt, das das Sperrsystem als ganzes umschließt und auf der Antriebswelle (6) oder Abtriebswelle (13) gelagert ist.

5. Sperrsystem nach Anspruch 1, dadurch gekennzeichnet, daß das Bremsglied (25) und Gegenbremsglied (26) zusammen eine Fliehkraftbremse oder Bandbremse bilden.

6. Sperrsystem nach Anspruch 1, dadurch gekennzeichnet, daß das Bremsglied (25) und Gegenbremsglied (26) zusammen eine elektrische Wirbelstrombremse bilden.

## Claims

1. An all-wheel-drive locking system in the front-axle/rear-axle driving train of a motor vehicle, having a planetary gear transmission producing the direct through drive and a braking device acting upon the planetary gear carrier of the said planetary gear transmission, the gear ratio for the direct through drive diverging slightly from 1:1, but the gear ratio to the braking device being substantially higher, characterized in that the planetary gear transmission comprises a hollow input gear (8) rotationally rigid with respect to a drive shaft (6), a hollow output gear (9) mounted coaxially adjacent to the hollow input gear (8) and rotationally rigid with respect to a driven shaft (13) and having a slightly different number of teeth, and planetary gears (20) mutually engaging with the two hollow gears (8, 9), mounted on the planetary gear carrier (22) and rotating therewith, the planetary gear transmission (8) comprising an input sun gear (7) connected rotationally rigidly to a drive shaft (6), an output sun gear (10) mounted coaxially adjacent to the input sun gear (7) and connected to a driven shaft (10) (sic) and having a somewhat greater number of teeth, and the planetary gears (14) mutually engaging with the two sun gears (7, 9) and mounted on the planetary gear carrier (15).

2. A locking system according to Claim 1, characterized in that the brake member (25) and the counter brake member (26) together form a hydrodynamic coupling.

3. A locking system according to Claim 2, characterized in that the brake member (25) and the counter brake member (26) are constructed as bladed half shells surrounding an oil-filled toroidal flow chamber (27).

4. A locking system according to Claim 3, characterized in that the counter brake member (26) (is) secured centred and sealed in a cylindrical housing (11) which revolves therewith and surrounds the locking system as a whole and is mounted on the drive shaft (6) or the driven shaft (13).

5. A locking system according to Claim 1, characterized in that the brake member (25) and the counter brake member (26) together form a centrifugal brake or a band brake.

6. A locking system according to Claim 1, characterized in that the brake member (25) and the counter brake member (26) together form an electrical eddy-current brake.

## Revendications

1. Système de blocage sur les quatre roues dans le train de transmission essieu avant-essieu arrière d'un véhicule automobile, comportant un train planétaire assurant la transmission directe et un dispositif de freinage appliqué à sa cage de transmission planétaire, de rapport de multiplication étant, pour la transmission directe, légèrement différent de 1:1, tandis que le rapport de multiplication à destination du dispositif de freinage est beaucoup plus élevé, caractérisé en ce que le train planétaire comprend une roue à denture intérieure d'entrée (8) fixe par rapport à un arbre d'entraînement (6), une roue à denture intérieure de sortie (9) placée coaxialement à côté, fixe en rotation par rapport à un arbre de sortie (13), et d'un nombre de dents légèrement différent, ainsi que des roues planétaires (20) en prise en même temps avec les deux roues à denture intérieure (8, 9), placées sur la cage de transmission planétaire (22) et tournant avec elle, le train planétaire (8) comprenant une roue planette d'entrée (7) solidaire en rotation d'un arbre d'entraînement (6), une roue planette de sortie (10) placée coaxialement à côté et reliée à un arbre de sortie (10), d'un nombre de dents un peu supérieur, ainsi que les roues satellites (14) en prise en même temps avec les deux roues planettes (7, 9); placées sue la cage de transmission planétaire (15).

2. Système de blocage selon la revendication 1, caractérisé en ce que l'élément de freinage (25) et le contre-élément de frein (26) constituent ensemble un embrayage hydrodynamique.

3. Système de blocage selon la revendication 2, caractérisé en ce que l'élément de frein (25) et le contre-élément de frein (26) sont réalisés sous la forme de demi-coques à palettes, qui embrassent un espace d'écoulement toroïde (27) rempli d'huile.

4. Système de blocage selon la revendication 3, caractérisé en ce que le contre-élément de frein (26) est centré et fixé hermétiquement avec un carter cylindrique (11) tournant avec lui qui embrasse le système de blocage dans son ensemble et est placé sur l'arbre d'entraînement (6) ou l'arbre de sortie (13).

5. Système de blocage selon la revendication 1, caractérisé en ce que l'élément de frein (25) et le contre-élément de frein (26) forment ensemble un frein centrifuge ou un frein à ruban.

6. Système de blocage selon la revendication 1, caractérisé en ce que l'élément de frein (25) et le contre-élément de frein (26) forment ensemble un frein électromagnétique à courants de Foucault.

FIG.1

FIG.2

FIG.3